# EUROPEAN PATENT APPLICATION

(11) **EP 3 672 108 A1**
(43) Date of publication of application: **24.06.2020**
(21) Application number: 19214950.8
(22) Date of filing: 10.12.2019
(51) Int. Cl.: H04B 10/112

(54) **COMMUNICATION MODULE**

(30) Priority: 21.12.2018 JP 2018239308
(71) Applicant: YAZAKI CORPORATION, Minato-ku, Tokyo 108-8333 (JP)
(72) Inventor: YANAGIDA, You, Susono-shi,, Shizuoka 410-1194 (JP)
(74) Representative: Grünecker Patent- und Rechtsanwälte PartG mbB

(57) **Abstract**

A communication module (1) includes: a housing (10) disposed on an inner (IN) surface facing a cabin, on a roof member (RF) of a vehicle (V); and an external-communication unit (20) assembled to the housing (10) and configured to communicate with an outside communication target (TA1) located outside the vehicle (V) using light beam (X1). In the communication module (1), the external-communication unit (20) is assembled to the housing (10) and the housing (10) is disposed on the inner (IN) surface facing the cabin, on the roof member (RF). In this state, the external-communication unit (20) of the communication module (1) communicates with the outside communication target (TA1) using the light beam (X1) including a carrier wave for conveying information. Accordingly, the communication module (1) exerts an effect of properly communicating with the outside communication target (TA1) located outside the vehicle (V).

## Description

### BACKGROUND OF THE INVENTION

### 1. Field of the Invention

The present invention relates to a communication module.

### 2. Description of the Related Art

Japanese Patent Application Laid-open No. 2009-171019 describes an overhead module attached to a ceiling surface of the cabin of a vehicle, as a type of traditional communication modules mounted on a vehicle. The overhead module accommodates an antenna for an in-vehicle wireless communication device. A part of or the whole of the antenna is set in an area allowing transmission and receipt of radio waves.

The above overhead module of Japanese Patent Application Laid-open No. 2009-171019 still has room for improvement, for example, in communication with an outside communication target located outside the vehicle.

### SUMMARY OF THE INVENTION

From the above point of view, the present invention aims to provide a communication module capable of properly communicating with an outside communication target located outside the vehicle.

In order to achieve the above mentioned object, a communication module according to one aspect of the present invention includes a housing disposed on an inner surface facing a cabin, on a roof member of a vehicle; and an external-communication unit assembled to the housing and configured to communicate with an outside communication target located outside the vehicle using light beam.

According to another aspect of the present invention, in the communication module, it is possible to configure that the housing and the external-communication unit are disposed at a location that allow the light beam used for communication with the outside communication target to pass through a windshield of the vehicle.

According to still another aspect of the present invention, in the communication module, it is possible to configure that the external-communication unit includes a front communication unit that communicates with the outside communication target located in front of the vehicle using the light beam and a rear communication unit that communicates with the outside communication target located behind the vehicle using the light beam.

According to still another aspect of the present invention, in the communication module, it is possible to further include a controller communicably connected with the front communication unit and the rear communication unit and configured to control communication of the front communication unit and the rear communication unit, wherein the housing includes a front housing to which the front communication unit is assembled and a rear housing provided separately from the front housing and to which the rear communication unit is assembled.

According to still another aspect of the present invention, in the communication module, it is possible to configure that the external-communication unit includes a transmitter capable of transmitting the light beam and a receiver capable of receiving the light beam.

According to still another aspect of the present invention, in the communication module, it is possible to further include an internal-communication unit assembled to the housing and configured to communicate with an inside communication target located inside the vehicle using light beam.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram that illustrates example use of a communication module of an embodiment;
FIG. 2 is a block diagram that illustrates an overall configuration of the communication module of the embodiment;
FIG. 3 is an example partially perspective view of the communication module of the embodiment mounted on a vehicle; and
FIG. 4 is a schematic drawing that illustrates an overview of a vehicle cabin on which the communication module of the embodiment is mounted.

### DETAILED DESCRIPTION OF THE PREFERRED EMBODIMENTS

Embodiments according to the present invention will now be described in detail with reference to the drawings. The embodiments are not intended to limit the invention. The embodiments described below include components that are easily replaceable with another component by the skilled person and that are substantially the same.

### Embodiments

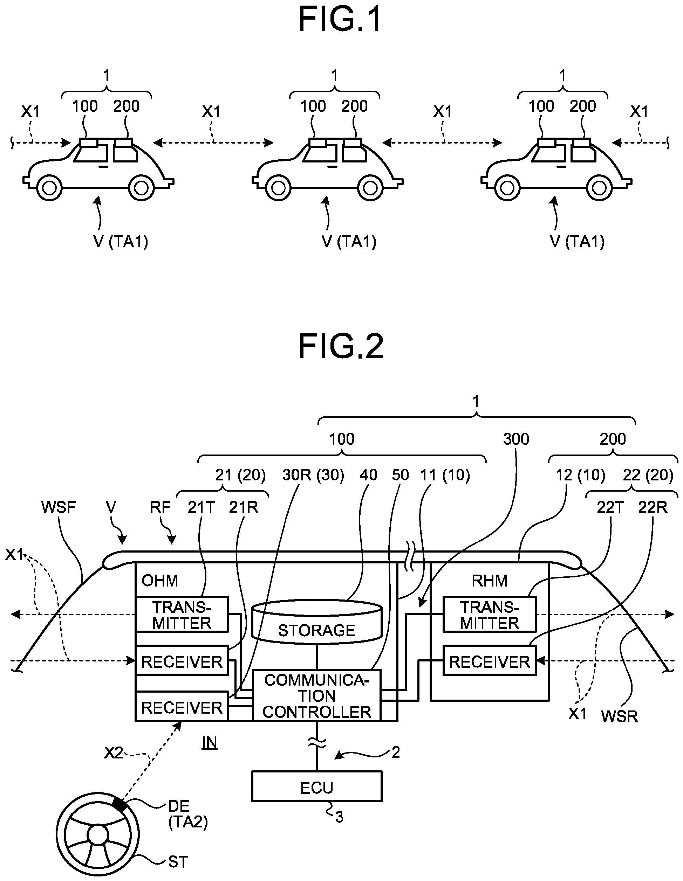

A communication module 1 of the embodiment is a structural module mounted on a vehicle V as illustrated in FIG. 1 to establish optical wireless communication with an outside communication target TA1 located outside the vehicle V. The outside communication target TA1 of this embodiment is another vehicle V different from the vehicle V on which the communication module 1 is mounted. The different vehicle V as the outside communication target TA1 also includes the communication module 1. The communication module 1 of this embodiment is mounted on each of the vehicles V that communicate with each other. Of the vehicles V communicating with each other, one vehicle V is regarded as the outside communication target TA1 with respect to the other vehicle V. In this embodiment, the communication modules 1 mounted on the respective vehicles V share the configuration. The communication module 1 is implemented with the components of FIG. 2 mounted on the vehicle V. The configuration of the communication module 1 will now be described in detail with reference to the drawings.

In the following description, components of the communication module 1 may be connected with one another to transfer electric power, control signals, various types of information, and others by any of the methods including wired connection using a wiring material such as an electric wire and wireless connection such as wireless communication and non-contact power transfer, unless otherwise specified. The vehicle V may be any vehicle using an electric motor or an engine as a drive source, such as an electric vehicle (EV), a hybrid electric vehicle (HEV), a plug-in hybrid electric vehicle (PHEV), a gasoline-powered vehicle, and a diesel-powered vehicle. The vehicle V may be driven manually by a driver, semiautomatically, or automatically. The vehicle V may belong to a group traveling in rows, or may travel alone independently from other vehicles.

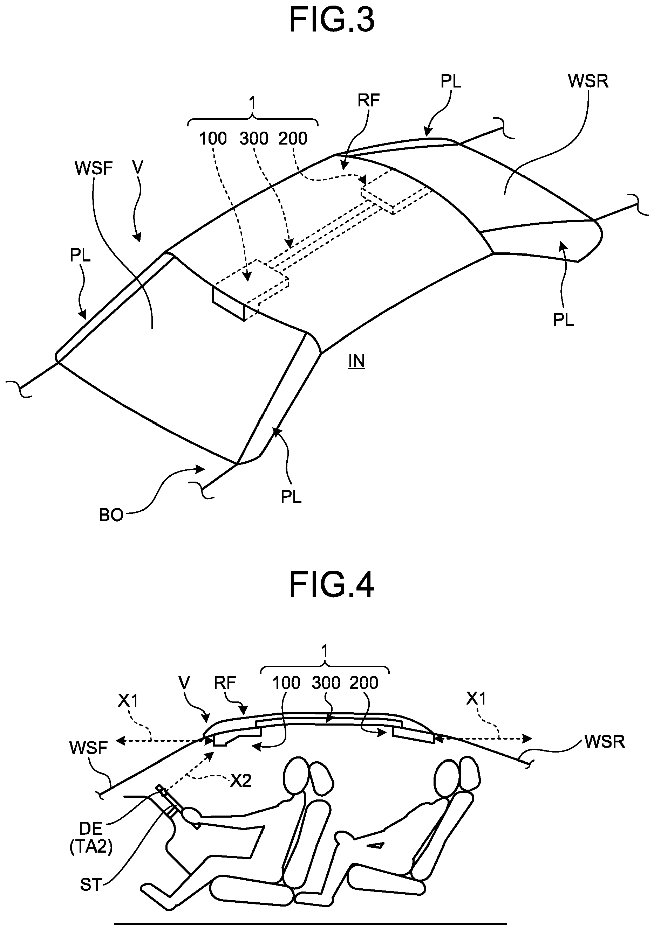

As illustrated in FIG. 2, the communication module 1 includes a housing 10, an external-communication unit 20, an internal-communication unit 30, a storage 40, and a communication controller 50 as a controller. The external-communication unit 20 includes a front communication unit 21 and a rear communication unit 22. The housing 10 includes a front housing 11 and a rear housing 12. The front housing 11, the front communication unit 21, the internal-communication unit 30, the storage 40, and the communication controller 50 are included in an overhead module (hereinafter, may be simply referred to as an "OHM") 100. The rear housing 12 and the rear communication unit 22 are included in a rear-head module (hereinafter, may be simply referred to as an "RHM") 200. The communication module 1 of this embodiment consists of two submodules, the OHM 100 and the RHM 200. In the communication module 1, the OHM 100 and the RHM 200 are communicably connected with each other through a connector 300. The communication module 1 includes the OHM 100 and the RHM 200 and the connector 300, and the connector 300 communicably connects the OHM 100 and the RHM 200 with each other. The communication module 1 has its main components such as the OHM 100 and the RHM 200 disposed on a roof member RF, particularly, inner (IN) surface thereof facing the cabin (see FIGS. 3 and 4). The roof member RF is a structure disposed on the upper part of the vehicle V in the vertical direction as a part of the exterior of the vehicle V. The roof member RF is connected to a vehicle body BO through a plurality of hollow pillars PL and supported on the upper part of the vehicle body BO in the vertical direction. The vehicle V is divided into an outer area outside the cabin and the inner (IN) area by the roof member RF as an upper boundary in the vertical direction. The communication module 1 is electrically connected with a power source, for example, through a power line (electric wire) routed inside the hollow pillar PL or a similar place and receives electric power.

The OHM 100 is a submodule of the communication module 1 and is disposed on the inner (IN) surface facing the cabin, on the roof member RF, and at a location closer to the front of the vehicle V (see FIGS. 3 and 4). The front of the vehicle V corresponds to a side of the vehicle V facing the direction of moving forward, of the front-rear direction (the longitudinal direction of the vehicle V, that is, the front-rear direction in which the vehicle V moves straight) of the vehicle V. The OHM 100 includes the front housing 11, the front communication unit 21, the internal-communication unit 30, the storage 40, and the communication controller 50, which are configured in a unit. The OHM 100 may further include a room lamp, various operation units, a speaker, a display, a camera, and other devices.

The front housing 11 constitutes the housing 10 of the OHM 100. The housing 10 is disposed on the inner (IN) surface facing the cabin, on the roof member RF, and the components of the communication module 1 are assembled to the housing 10. Of the housings 10, the front housing 11 as a component of the OHM 100 is disposed on the inner (IN) surface facing the cabin, on the roof member RF, particularly, at a location closer to the front of the vehicle V (see FIGS. 3 and 4). More specifically, the front housing 11 is disposed at a location where the front windshield WSF and the roof member RF of the vehicle V contact with each other and at a substantially center position in the vehicle width direction of the vehicle V. The windshield WSF is a light-transmissive member through which light can pass. The windshield WSF, sometimes referred to as a front glass, is disposed in the front part of the vehicle V and separates, as a boundary, the inside (IN) and the outside of the vehicle from each other. The front housing 11 accommodates the front communication unit 21, the internal-communication unit 30, the storage 40, and the communication controller 50 included in the OHM 100. The front housing 11, as a whole, is a hollow box with a plurality of components assembled thereto. The front housing 11 is made of insulating synthetic resin. The front housing 11 accommodates the front communication unit 21, the internal-communication unit 30, the storage 40, and the communication controller 50, assembled to the inner hollow space thereof, and integrates the components as a unit of the OHM 100. The front communication unit 21 and the internal-communication unit 30, accommodated in the front housing 11, are partially exposed to the outside of the front housing 11.

The front communication unit 21 constitutes the external-communication unit 20 of the OHM 100. The external-communication unit 20 is an optical wireless communication unit assembled to the housing 10 and configured to communicate with the outside communication target TA1 (for example, another vehicle V traveling in front of the vehicle V) using communication light beam X1 (see FIGS. 1 and 4). The communication light beam X1 is a light ray (light wave) that includes a carrier wave (carrier) for conveying information (signals), and typically has a wavelength ranging from infrared to visible light. The external-communication unit 20 establishes, what is called, optical wireless communication using the communication light beam X1. Of the external-communication units 20, the front communication unit 21 included in the OHM 100 is used for communication with the outside communication target TA1 traveling in front of the vehicle V using the communication light beam X1. In this embodiment, the front communication unit 21 is assembled to the front housing 11 disposed close to the front of the vehicle V. The front housing 11 and the front communication unit 21 are disposed at a location that allows the communication light beam X1 used for communication with the outside communication target TA1 to pass through the windshield WSF of the vehicle V.

The front communication unit 21 of this embodiment includes a transmitter 21T and a receiver 21R. The transmitter 21T is capable of transmitting the communication light beam X1. The transmitter 21T may use various known optical wireless transmitters, and includes a light source device and the like to generate the communication light beam X1. The receiver 21R is capable of receiving the communication light beam X1. The receiver 21R may use various known optical wireless receivers, and includes a light-receiving device and the like to receive the communication light beam X1. The transmitter 21T is disposed in the front housing 11, particularly, at a location that allows the communication light beam X1 transmitted from the transmitter 21T to pass through the windshield WSF. Similarly, the receiver 21R is disposed in the front housing 11 at a location that allows the communication light beam X1 transmitted from the outside communication target TA1 toward the receiver 21R to pass through the windshield WSF. More specifically, the front communication unit 21 is accommodated in the front housing 11 such that a light-emitting area of the transmitter 21T and a light-receiving area of the receiver 21R are exposed toward the front of the vehicle V from the outer surface of the front housing 11. This layout allows the transmitter 21T to transmit the communication light beam X1 toward the front of the vehicle V. The communication light beam X1 transmitted from the transmitter 21T toward the front of the vehicle V passes through the windshield WSF. The receiver 21R can receive the communication light beam X1 transmitted from the outside communication target TA1 located in front of the vehicle V. The communication light beam X1 transmitted from an area in front of the vehicle V toward the receiver 21R passes through the windshield WSF.

The internal-communication unit 30 is an optical wireless communication unit assembled to the housing 10 and configured to communicate with an inside communication target TA2 disposed inside the vehicle V using communication light beam X2 (see FIG. 4). The communication light beam X2, as with the communication light beam X1, is a light ray that includes a carrier wave for conveying information, and typically has a wavelength ranging from infrared to visible light and different from the wavelength of the communication light beam X1. The internal-communication unit 30 establishes, what is called, optical wireless communications using the communication light beam X2. The internal-communication unit 30 included in the OHM 100 is used for communication with the inside communication target TA2 disposed inside (IN) the vehicle V through the communication light beam X2. In this embodiment, the internal-communication unit 30 is assembled to the front housing 11 disposed close to the front of the vehicle V.

The inside communication target TA2 of this embodiment is, for example, a detector DE disposed inside (IN) the vehicle V. The detector DE detects various information inside (IN) the vehicle V. For example, the detector DE detects biological information of a passenger of the vehicle V. Examples of the biological information detected by the detector DE include vital signs such as the heart rate, respiratory rate, pulse rate, blood pressure, body temperature, brain waves, muscle current, and identification information allowing identification of individuals, such as fingerprint information, vein information, facial information, voiceprint information, and iris information, and further include information relating to the blood glucose level, blood alcohol concentration, electrocardiogram, arousal level, face and line-of-sight orientation, eyelid opening position, and the like. The detector DE may include, for example, electrodes for detecting various biological information, a blood pressure sensor, an electrocardiogram sensor, a heart rate sensor, a respiratory sensor, a pulse sensor, a body temperature sensor, an electroencephalogram sensor, a muscle current sensor, various individual identification information sensors, a camera for imaging a passenger and detecting biological information from the image, and an optical system detector that irradiates a passenger with light and receives the reflected light and detects biological information based on the reflected light. The detector DE further functions as an optical wireless transmitter to transmit the communication light beam X2. The communication light beam X2 transmitted from the detector DE is a light ray including a carrier wave for conveying detected information. In this example illustration, the detector DE is mounted on a steering ST as a steering member to steer the vehicle V.

The internal-communication unit 30 of this embodiment includes a receiver 30R. The receiver 30R is capable of receiving the communication light beam X2. The receiver 30R may use various known optical wireless receivers, as with the receiver 21R, and includes a light-receiving device and the like to receive the communication light beam X2. The receiver 30R is disposed in the front housing 11 at a location that allows the receiver 30R to receive the communication light beam X2 transmitted from the detector DE, which is the inside communication target TA2. More specifically, the internal-communication unit 30 is accommodated in the front housing 11 such that a light-receiving area of the receiver 30R is exposed toward the inside (IN) of the vehicle V from the outer surface of the front housing 11. This layout allows the receiver 30R to receive the communication light beam X2 transmitted from the inside communication target TA2 disposed inside (IN) the vehicle V.

The storage 40 stores various types of information. The storage 40 may be, for example, a comparatively large-capacity storage such as a hard disk, a solid state drive (SSD), and an optical disc, or may be a data-rewritable semiconductor memory such as a random access memory (RAM), a flash memory, and a non-volatile static random access memory (NVSRAM). The storage 40 stores therein, for example, conditions and information necessary for the communication controller 50 to perform various processing, computer programs and applications executed by the communication controller 50, control data, and others. For example, the storage 40 is capable of transiently storing various information to be transmitted and received by the external-communication unit 20 and the internal-communication unit 30. Such information in the storage 40 is loaded by the communication controller 50 as necessary.

The communication controller 50 integrally controls communication of the communication module 1. The communication controller 50 is implemented as, for example, an electronic circuit using a known microcomputer including a central computing processing device, such as a central processing unit (CPU), as a main component. The communication controller 50 is communicably connected with the transmitter 21T and the receiver 21R of the front communication unit 21 included in the external-communication unit 20, and the receiver 30R of the internal-communication unit 30, and the storage 40 so as to exchange various information with these units. The communication controller 50 is further communicably connected with a transmitter 22T and a receiver 22R of the later-described rear communication unit 22 included in the external-communication unit 20, via the later-described connector 300, so as to exchange various information with these units. The communication controller 50 will be described in detail after description of the RHM 200 and the connector 300.

The RHM 200 is a submodule of the communication module 1 and is disposed on the inner (IN) surface facing the cabin, on the roof member RF, and at a location closer to the rear of the vehicle V (see FIGS. 3 and 4). The rear of the vehicle V corresponds to a side of the vehicle V toward which the vehicle V is backed in the vehicle front-rear direction. The RHM 200 includes the rear housing 12 and the rear communication unit 22, which are configured in a unit. The RHM 200 may further include a room lamp, various operation units, a speaker, a display, a camera, and other devices.

The rear housing 12 constitutes the housing 10 of the RHM 200. Of the housings 10, the rear housing 12 as a component of the RHM 200 is disposed on the inner (IN) surface facing the cabin, on the roof member RF, at a location closer to the rear of the vehicle V (see FIGS. 3 and 4). More specifically, the rear housing 12 is disposed at a location where a rear windshield WSR and the roof member RF of the vehicle V contact with each other and at a substantially center position in the vehicle width direction of the vehicle V. The windshield WSR, as with the windshield WSF, is a light-transmissive member through which light can pass. The windshield WSR, sometimes referred to as a rear glass, is disposed in the rear of the vehicle V and separates, as a boundary, the inside (IN) and the outside of the vehicle from each other. The rear housing 12 accommodates the rear communication unit 22 included in the RHM 200. The rear housing 12 is separate from the above front housing 11. The rear housing 12, as a whole, is a hollow box with a plurality of components assembled thereto. The rear housing 12 is made of insulating synthetic resin. The rear housing 12 accommodates therein the rear communication unit 22 assembled to the inner hollow space thereof, and integrates the component as a unit of the RHM 200. The rear communication unit 22, accommodated in the rear housing 12, is partially exposed to the outside of the rear housing 12.

The rear communication unit 22 constitutes the external-communication unit 20 of the RHM 200. Of the external-communication units 20, the rear communication unit 22 included in the RHM 200 is used for communication with the outside communication target TA1 (for example, another vehicle V traveling behind the vehicle V) located behind the vehicle V using the communication light beam X1. In this embodiment, the rear communication unit 22 is assembled to the rear housing 12 disposed close to the rear of the vehicle V. The rear housing 12 and the rear communication unit 22 are disposed at a location that allows the communication light beam X1 used for communication with the outside communication target TA1 to pass through the windshield WSR of the vehicle V.

The rear communication unit 22 of this embodiment includes the transmitter 22T and the receiver 22R. The transmitter 22T is capable of transmitting the communication light beam X1. The transmitter 22T may use various known optical wireless transmitters, as with the transmitter 21T, and includes a light source device and the like to generate the communication light beam X1. The receiver 22R is capable of receiving the communication light beam X1. The receiver 22R may use various known optical wireless receivers, as with the receiver 21R, and includes a light-receiving device and the like to receive the communication light beam X1. The transmitter 22T is disposed in the rear housing 12, particularly, at a location that allows the communication light beam X1 transmitted from the transmitter 22T to pass through the windshield WSR. Similarly, the receiver 22R is disposed in the rear housing 12 at a location that allows the communication light beam X1 transmitted from the outside communication target TA1 toward the receiver 22R to pass through the windshield WSR. More specifically, the rear communication unit 22 is accommodated in the rear housing 12 such that a light-emitting area of the transmitter 22T and a light-receiving area of the receiver 22R are exposed toward the rear of the vehicle V from the outer surface of the rear housing 12. This layout allows the transmitter 22T to transmit the communication light beam X1 toward the rear of the vehicle V. The communication light beam X1 transmitted from the transmitter 22T toward the rear of the vehicle V passes through the windshield WSR. The receiver 22R can receive the communication light beam X1 transmitted from the outside communication target TA1 located behind the vehicle V. The communication light beam X1 transmitted from an area behind the vehicle V toward the receiver 22R passes through the windshield WSR.

The connector 300 connects the OHM 100 and RHM 200 so as to be communicable with each other. More specifically, the connector 300 communicably connects the communication controller 50 of the OHM 100 with the transmitter 22T and the receiver 22R of the RHM 200. The connector 300 is functionally capable of wired communication via, for example, a telecommunications cable and an optical cable and of wireless communication via, for example, a wireless communication unit to transfer information between the communication controller 50 and the transmitter 22T and the receiver 22R.

In the communication module 1 configured as above, the communication controller 50 is communicably connected with both the front communication unit 21 and the rear communication unit 22 of the external-communication unit 20. The communication controller 50 controls optical wireless communication of the front communication unit 21 and the rear communication unit 22. Furthermore, in the communication module 1 configured as above, the communication controller 50 is communicably connected with the internal-communication unit 30. The communication controller 50 controls optical wireless communication of the internal-communication unit 30. The communication controller 50 integrally controls communication of the communication module 1 including the OHM 100 and the RHM 200. As described above, the communication controller 50 is communicably connected with the transmitters 21T and 22T, the receivers 21R, 22R, and 30R, and the storage 40. In the communication module 1, the communication controller 50 executes various computing processing to establish optical wireless communication of the external-communication unit 20 and the internal-communication unit 30. The communication controller 50 executes computer programs and applications stored in the storage 40. Specifically, the communication controller 50 starts up the computer program and the application to output output signals to the external-communication unit 20 and the internal-communication unit 30 and executes various processing to implement the functions.

For example, the communication controller 50 is capable of performing such processing that generates carrier waves of signals corresponding to information to be transmitted from the transmitters 21T and 22T and controls the transmitters 21T and 22T to transmit the communication light beam X1 including the carrier waves to the outside communication targets TA1. Furthermore, the communication controller 50 is capable of performing such processing that controls the receivers 21R and 22R to receive the communication light beam X1 transmitted from the outside communication targets TA1 and extracts signals, corresponding to information transmitted from the outside communication targets TA1, from carrier waves included in the received communication light beam X1. Likewise, the communication controller 50 is capable of performing such processing that controls the receiver 30R to receive the communication light beam X2 transmitted from the inside communication target TA2 and extracts a signal, corresponding to information transmitted from the inside communication target TA2, from a carrier wave included in the received communication light beam X2.

The communication controller 50 of this embodiment is further communicably connected with an electronic control unit (ECU) 3 via, for example, an in-vehicle local area network (LAN) 2. The ECU 3 is an electronic control unit that integrally controls the vehicle V. The ECU 3 is electrically connected with each unit of the vehicle V to obtain various vehicle information relating to the vehicle V from the unit. Examples of the vehicle information relating to the vehicle V obtained by the ECU 3 may include information of vehicle conditions and information of the environment of the vehicle. The information of vehicle conditions is information relating to the vehicle V, which may include, for example, the travel speed, the acceleration (the acceleration in each of the vehicle front-rear direction, the vehicle width direction, and the vehicle roll direction), the position of the steering, the amount of operation of the accelerator pedal (the amount by which the accelerator pedal is depressed), the amount of operation of the brake pedal (the amount by which the brake pedal is depressed), the gear position, the amount of energy accumulated in the battery, and information about whether the direction indicators (blinkers) have been operated, the indicated direction, and the like. Examples of the information of the vehicle environment may include image information of the surrounding environment of the vehicle V, the presence or absence of an outside object around the vehicle V, the relative distance and the relative speed with respect to the object, information about the outside object such as the time-to-collision (TTC) (the tolerance time before collision), information of the white lines of the lane on which the vehicle V is traveling, the current location of the vehicle V (GPS information), map information, environmental information such as the weather, the presence or absence of rain, the presence or absence of sunshine, the illuminance, and the temperature, at the current location of the vehicle V.

For example, the communication controller 50 may acquire vehicle information of the vehicle V accumulated in the ECU 3, and control the respective transmitters 21T and 22T of the front communication unit 21 and the rear communication unit 22 to transmit the information to the outside communication targets TA1 using the communication light beam X1. The communication controller 50 may control the respective transmitters 21T and 22T of the front communication unit 21 and the rear communication unit 22 to transmit image information photographed by cameras mounted on the OHM 100 and the RHM 200 to the outside communication targets TA1 using the communication light beam X1. Information of the vehicle V transmitted to the outside communication target TA1 may be used by the outside communication target TA1 or may be forwarded to another outside communication target TA1. For example, the communication controller 50 may extract information of the outside communication targets TA1 from the communication light beam X1, transmitted from the outside communication targets TA1 and received by the respective receivers 21R and 22R of the front communication unit 21 and the rear communication unit 22. The information of the outside communication target TA1 transmitted from the outside communication target TA1 may be stored in the storage 40, or may be used by the vehicle V, or may be forwarded to another outside communication target TA1, for example, through the external-communication unit 20. For example, the ECU 3 may acquire the information of the outside communication target TA1, received by the receivers 21R and 22R and extracted by the communication controller 50, from the communication controller 50 and use the information for various control on the vehicle V. As another example, the communication controller 50 may extract detection information, in this case, biological information, from the communication light beam X2, the information detected by and transmitted from the detector DE as the inside communication target TA2 and received by the receiver 30R of the internal-communication unit 30. The detection information (biological information) transmitted from the detector DE may be stored in the storage 40, or may be used by the vehicle V, or may be forwarded to another outside communication target TA1, for example, through the external-communication unit 20. For example, the ECU 3 may acquire the detection information (biological information), detected by the detector DE and received by the receiver 30R and extracted by the communication controller 50, from the communication controller 50 and use the information for various control on the vehicle V. The communication controller 50 may control the ECU 3 or another communication device to upload a part of the information extracted from the communication light beam X1 and the communication light beam X2 onto, what is called, a cloud service device or a similar place deployed on an external network of the vehicle V.

The communication module 1 described above has the external-communication unit 20 assembled to the housing 10 and further has the housing 10 disposed on the inner (IN) surface facing the cabin, on the roof member RF of the vehicle V. The above layout of the communication module 1 allows the external-communication unit 20 to communicate with the outside communication target TA1 using the communication light beam X1 including a carrier wave for conveying information. In the cabin (IN) of the vehicle V, an area near the inner (IN) surface of the roof member RF, the surface on which the external-communication unit 20 is mounted, is comparatively less likely to be surrounded and blocked by an obstacle. This layout of the communication module 1, having the housing 10 and the external-communication unit 20 disposed on the inner (IN) surface of the roof member RF, is beneficial in securing the optical path of the communication light beam X1 between the external-communication unit 20 and the outside communication target TA1. The communication module 1 is therefore allowed to establish less disturbed optical wireless communication between the external-communication unit 20 and the outside communication target TA1 through the communication light beam X1. The communication light beam X1 has a relatively narrow directivity and a relatively high degree of secrecy, compared to radio waves. The communication module 1 can therefore establish communication less likely to be intercepted by any external sources other than the outside communication target TA1 with a comparatively simple circuitry. Appropriate security performance is therefore achieved. The communication module 1 can accordingly properly communicate with the outside communication target TA1 located outside the vehicle V.

The communication module 1 transfers various information between the external-communication unit 20 and the outside communication target TA1 using the communication light beam X1 so that the information can be used for various control for driving the vehicle V. The vehicle V can effectively use such information obtained from the outside communication target TA1 through the communication light beam X1 for, for example, control of the safety driving system, control of the automatic driving system, control to confirm the presence of enough space to safely pass a vehicle traveling in front of the vehicle V, and read-ahead control to reduce the travel speed of the vehicle V upon a sudden speed reduction of a vehicle in front thereof. Such information reflected on various control can improve the performance of the vehicle V. The vehicle V is further capable of outputting the information, obtained from the outside communication target TA1 through the communication light beam X1, to a display and a speaker in the cabin (IN). This operation can provide the passenger of the vehicle V with a wider range of information obtained at locations away from the vehicle V. The communication module 1 is further allowed to exchange and transfer information with a plurality of vehicles V, which can reduce data communications via roadside devices or the like equipped as parts of infrastructure. This communication structure therefore leads to a reduction in the number of necessary roadside devices.

For example, the communication module 1 may be used together with another communication module that establishes wireless radio communication with the outside communication target TA1 using radio waves for communication. This combined use allows optical wireless communication and wireless radio communication to complement each other and ensures redundancy. This structure therefore allows the communication module 1 to establish larger-capacity data communication with the outside communication target TA1 with greater reliability. Furthermore, the communication module 1 may adopt optical wireless communication using the communication light beam X1 prior to wireless radio communication using communication radio waves, which can increase the amount of data space remaining for the wireless radio communication and allows more effective use of the wireless radio communication.

In the above communication module 1, the housing 10 (the front housing 11 and the rear housing 12) and the external-communication unit 20 (the front communication unit 21 and the rear communication unit 22) are disposed at locations that allow the communication light beam X1 to pass through the windshields WSF and WSR. This layout allows the communication module 1 to certainly establish optical wireless communication using the communication light beam X1 between the external-communication unit 20 and the outside communication target TA1.

With the external-communication unit 20 consisting of the front communication unit 21 and the rear communication unit 22, the communication module 1 can establish optical wireless communication with both the outside communication target TA1, located in front of the vehicle V, and the outside communication target TA1, located behind the vehicle V, using the communication light beam X1. This configuration of the communication module 1 allows the vehicles V traveling in rows in a group to share information with one another.

In the communication module 1, the front communication unit 21 and the rear communication unit 22 are assembled to respective separate housings, the front housing 11 and the rear housing 12. This configuration of the communication module 1 allows the communication controller 50 to separately control optical wireless communication of the front communication unit 21 and the rear communication unit 22. Mountability of the communication module 1 is therefore improved.

As described above, the external-communication unit 20 of the communication module 1 includes both the transmitters 21T and 22T and the receivers 21R and 22R. The communication module 1 is therefore allowed to transmit information to the outside communication target TA1 and to receive information from the outside communication target TA1 by optical wireless communication using the communication light beam X1.

Furthermore, the internal-communication unit 30 of the communication module 1 is capable of establishing optical wireless communication with the inside communication target TA2 inside the vehicle V using the communication light beam X2. The communication module 1 in this configuration can obtain information having a comparatively high degree of secrecy, such as biological information of the passenger, through the communication light beam X2 less likely to be intercepted. Appropriate security performance thus can be ensured.

The communication module described in the embodiment according to the present invention is not limited to the configuration of the above embodiment, and various modifications can be made within the scope of the appended claims.

The outside communication target TA1 has been described as another vehicle V different from the vehicle V, on which the communication module 1 is mounted; however, examples of the outside communication target TA1 are not limited thereto. The communication module 1 has been described as a module to establish, what is called, vehicle to vehicle (V2V, between vehicles) communication; however, examples of communication feature are not limited thereto. For example, the outside communication target TA1 may be a roadside device placed on the roads on which the vehicle V travels or at intersections. The communication module 1 described above may establish, what is called, vehicle to everything (V2X) communication including vehicle to infrastructure (V2I, between vehicle and road) communication.

In the above description, the communication module 1 is mounted on each vehicle V, and the configuration thereof is shared among the communication modules 1 of the respective vehicles V, which is, however, not a limiting example of the communication module 1. In the above description, the external-communication unit 20 includes the front communication unit 21 and the rear communication unit 22; however, the configuration of the external-communication unit 20 is not limited thereto. The external-communication unit 20 may include either one of the front communication unit 21 and the rear communication unit 22. In the above description, the front communication unit 21 includes the transmitter 21T and the receiver 21R, and the rear communication unit 22 includes the transmitter 22T and the receiver 22R. The configurations of the respective communication units are not limited thereto. For example, the front communication unit 21 may include either one of the transmitter 21T and the receiver 21R, and the rear communication unit 22 may include either one of the transmitter 22T and the receiver 22R. In other words, the front communication unit 21 may include at least the transmitter 21T or the receiver 21R, or the rear communication unit 22 may include at least the transmitter 22T or the receiver 22R. The external-communication unit 20 only needs to establish optical wireless communication with the outside communication target TA1 using the communication light beam X1 regardless of whether the communication is transmission or receiving of the communication light beam X1. Furthermore, in the above description, the communication module 1 includes the internal-communication unit 30, which is, however, not a limiting example of the communication module 1. The communication module 1 may include no internal-communication units 30. The internal-communication unit 30 may be included in the RHM 200. The internal-communication unit 30 may include a transmitter in addition to the receiver 30R.

In the above description, the external-communication unit 20 communicates with the outside communication target TA1 located in front of the vehicle V and with the outside communication target TA1 located behind the vehicle V using the communication light beam X1. Operation of the external-communication unit 20 is, however, not limited thereto. For example, the external-communication unit 20 may communicate with the outside communication target TA1 located at the side of the vehicle V using the communication light beam X1.

The inside communication target TA2 communicating with the internal-communication unit 30 has been described as the detector DE, which is, however, not a limiting example of the inside communication target TA2.

In the above description, the communication module 1 includes, without being limited to, the OHM 100 and the RHM 200. For example, the communication module 1 may include a unit in which the front communication unit 21 of the external-communication unit 20, the rear communication unit 22 of the external-communication unit 20, the internal-communication unit 30, the storage 40, and the communication controller 50 are assembled to the same housing 10. In this configuration, the communication module 1 may include no connectors 300. In the above description of the communication module 1, the OHM 100 and the RHM 200 are controlled in conjunction with each other by the same communication controller 50; however, the configuration of the communication module 1 is not limited thereto. The communication module 1 may include respective communication controllers 50 for the OHM 100 and the RHM 200 to separately control the OHM 100 and the RHM 200.

Furthermore, the communication module 1 may be used together with an apparatus that establishes optical communication by overlapping a carrier wave for conveying information on the light emitted from a headlamp and a taillamp of the vehicle V.

Computer programs, applications, various types of data, and others described above may be updated as appropriate. Computer programs, applications, various types of data, and others described above can be, for example, partially or entirely downloaded as necessary. Some of or all of the processing functions of the communication controller 50 may be implemented by a CPU or a similar device, a computer program interpreted and executed by the CPU or the similar device, or may be implemented as hardware using, for example, the hard-wired logic.

The communication module of the present embodiment includes a communication unit for external communication and a housing. The external-communication unit is assembled to the housing, and the housing is mounted on the inner surface facing the cabin, on a roof member of the vehicle. In this state, the external-communication unit of the communication module communicates with an outside communication target using light. Accordingly, the communication module exerts an effect of properly communicating with the outside communication target located outside the vehicle.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication module (1), comprising:
a housing (10) disposed on an inner (IN) surface facing a cabin, on a roof member (RF) of a vehicle (V); and
an external-communication unit (20) assembled to the housing (10) and configured to communicate with an outside communication target (TA1) located outside the vehicle (V) using light beam (X1).

2. The communication module (1) according to claim 1, wherein
the housing (10) and the external-communication unit (20) are disposed at a location that allow the light beam (X1) used for communication with the outside communication target (TA1) to pass through a windshield (WSF,WSR) of the vehicle (V).

3. The communication module (1) according to claim 1 or 2, wherein
the external-communication unit (20) includes a front communication unit (21) that communicates with the outside communication target (TA1) located in front of the vehicle (V) using the light beam (X1) and a rear communication unit (22) that communicates with the outside communication target (TA1) located behind the vehicle (V) using the light beam (X1).

4. The communication module (1) according to claim 3, further comprising:
a controller (50) communicably connected with the front communication unit (21) and the rear communication unit (22) and configured to control communication of the front communication unit (21) and the rear communication unit (22), wherein
the housing (10) includes a front housing (11) to which the front communication unit (21) is assembled and a rear housing (12) provided separately from the front housing (11) and to which the rear communication unit (22) is assembled.

5. The communication module (1) according to any one of claims 1 to 4, wherein
the external-communication unit (20) includes a transmitter (21T,22T) capable of transmitting the light beam (X1) and a receiver (21R,22R) capable of receiving the light beam (X1).

6. The communication module (1) according to any one of claims 1 to 5, further comprising:
an internal-communication unit (30) assembled to the housing (10) and configured to communicate with an inside communication target (TA2) located inside the vehicle (V) using light beam (X2).
